# EUROPEAN PATENT APPLICATION

(11) **EP 4 005 428 A1**
(43) Date of publication of application: **01.06.2022**
(21) Application number: 21210219.8
(22) Date of filing: 24.11.2021
(51) Int. Cl.: A45C 7/00, A45C 9/00, A45C 13/02, A47B 23/00, G06F 1/16, A45C 3/02

(54) **MOBILE WORKSTATION**

(30) Priority: 24.11.2020 US 202063117622 P
(71) Applicant: Deflecto, LLC, Indianapolis, IN 46250 (US)
(72) Inventor: MALMLOFF, Craig R., Fishers, 46038 (US)
(74) Representative: Loustalan, Paul William

(57) **Abstract**

A mobile workstation adapted to carry a mobile computing device includes a balanced case having a bottom compartment and a top compartment. The top compartment is coupled to the bottom compartment and pivotable relative to the bottom compartment.

## Description

### FIELD OF THE DISCLOSURE

The present disclosure relates generally to carrying cases, and more specifically to carrying cases that house a mobile computing device such as a laptop or tablet.

### BACKGROUND

Business men and women often carry laptop computers while traveling between different locations. In some cases, business men and women carrying the laptops in carrying cases or bags that may also house other work materials. These carrying cases allow business men and women to transport their work materials to different locations or work spaces.

Even though laptop computers allow business men and women to work in the office, remotely, or while traveling, it may be difficult to find an adequate space to work in a remote setting. Moreover, working in a remote setting may make it difficult to organize and keep track of other work materials or accessories.

### SUMMARY

The present disclosure may comprise one or more of the following features and combinations thereof.

A mobile workstation may be configured to provide a user with a private enclosed workstation in any setting by allowing the user to work on any relatively flat surface, such as the user's lap, table, desk, etc., while keeping their other work materials situated. The workstation may be adapted to carry a mobile computing device such as a computer, a laptop, a tablet, or other mobile computing device. The workstation may include a balanced case, detachable accessories, and an ergonomic laptop stand.

Optionally, the balanced case has a bottom compartment and a top compartment. The top compartment may be pivotable relative to the bottom compartment about an axis between a closed configuration an open configuration. The case may also be configured to be easily balanced on the user's lap or rest on other surfaces (i.e. a table, desk, etc.).

Optionally, the detachable storage accessories may be selectively coupled to the bottom compartment of the case. The detachable accessories may be pivotable about a side axis relative to the bottom compartment between a folded-in position and a folded-out position.

Optionally, the laptop stand may include a base, a support portion, a mouse pad, and a mobile phone stand. The base may be coupled to the bottom compartment of the case. The support portion may support the laptop and may be configured to move relative to base between a flat configuration and an angled configuration. The mouse pad and the mobile phone stand may be coupled to the base. The mobile phone stand may be configured to pivot relative to the base between a retracted position an extended position.

Optionally, the mobile office workstation may be movable between a transporting mode and a work mode. In the transporting mode, the accessories may be in the folded-in position such that the accessories extend inside the bottom compartment so that the top compartment may be in the closed configuration. In the work mode, the top compartment is in the open configuration and the accessories are in the folded-out position such that the accessories extend outside the bottom compartment.

These and other features of the present disclosure will become more apparent from the following description of the illustrative embodiments.

### BRIEF DESCRIPTION OF THE DRAWINGS

Fig. 1 is a perspective view of a mobile workstation configured to change between a transporting mode and a work mode as shown in Fig. 1A;
Fig. 1A is a perspective view of the mobile workstation of Fig. 1 showing the mobile workstation has changed to the work mode to provide a user with a private enclosed workstation that may be used in any setting by allowing the user to work on any relatively flat surface;
Fig. 2 is a perspective view of the mobile workstation in Fig. 1 showing the mobile workstation includes a case configured to change between a closed configuration as shown in Fig. 1 and an open configuration as shown in Fig. 3, detachable accessories coupled to the case configured to change between a folded-in position and a folded-out position as shown in Fig. 3, and a mobile computing device stand configured to support a mobile computing device;
Fig. 3 is a view similar to Fig. 2 showing the mobile workstation in the work mode in which the case is in the open configuration and the detachable accessories are in the folded-out position;
Fig. 4 is a view similar to Fig. 3 showing the detachable accessories are configured to be detached from the case such that the accessories are interchangeable;
Fig. 5 is a view similar to Fig. 4 showing the laptop stand includes a base coupled to a bottom compartment of the case, a support portion that supports the laptop and configured to move relative to base between a flat configuration and an angled configuration as shown in Figs. 14-15 when the workstation is in the work mode, and a mobile phone stand coupled to the base and configured to pivot relative to the base between a retracted position an extended position as shown in Fig. 4;
Fig. 6 is a view similar to Fig. 5 showing the case including a top compartment coupled to the bottom compartment, and showing the top compartment has a main portion and an organization panel coupled to the main portion and configured to hold different work materials;
Fig. 7 is a perspective view of the mobile workstation of Fig. 1 showing the top compartment further includes an outer cover pivotable relative to the main portion between a closed position as shown in Fig. 1 and an open position;
Fig. 8 is a perspective view of the mobile workstation of Fig. 5 showing the laptop positioned on the laptop stand;
Fig. 9 is a perspective view of the mobile workstation of Fig. 6 showing the mobile phone stand in the extended position with a mobile phone arranged in a stand space formed in the holder;
Fig. 9A is a perspective view of the mobile workstation of Fig. 6 showing laptop shape further includes a mouse pad coupled to the base of the laptop stand;
Fig. 10 is a perspective view of the mobile workstation of Fig. 8 showing the laptop stand in the angled configuration so that the laptop is ergonomically positioned;
Fig. 11 is perspective view of the mobile workstation of Fig. 10 showing the mobile workstation positioned on a lap of the user in the work mode;
Fig. 12 is an elevation view of the mobile workstation of Fig. 11 showing the mobile workstation positioned on the lap of the user with the laptop stand in the level configuration;
Fig. 13 is a view similar to Fig. 12 showing the laptop stand in the angled configuration;
Fig. 14 is an elevation view of the mobile workstation of Fig. 8 showing the case further includes adjustment straps that extend between and interconnect the top and bottom compartments to cause the top compartment to move between an upright position as shown in Figs. 15, a flat position as shown in Fig. 16, and a relaxed position as shown in Fig. 17;
Fig. 15 is a view similar to Fig. 14 showing the top compartment in one upright position in which the top compartment is at a generally right angle relative to the bottom compartment;
Fig. 16 is a view similar to Fig. 15 showing the top compartment in the flat position in which the top compartment is parallel with the bottom compartment; and
Fig. 17 is a view similar to Fig. 16 showing the top compartment in the relaxed position in which the adjustment straps are loose.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

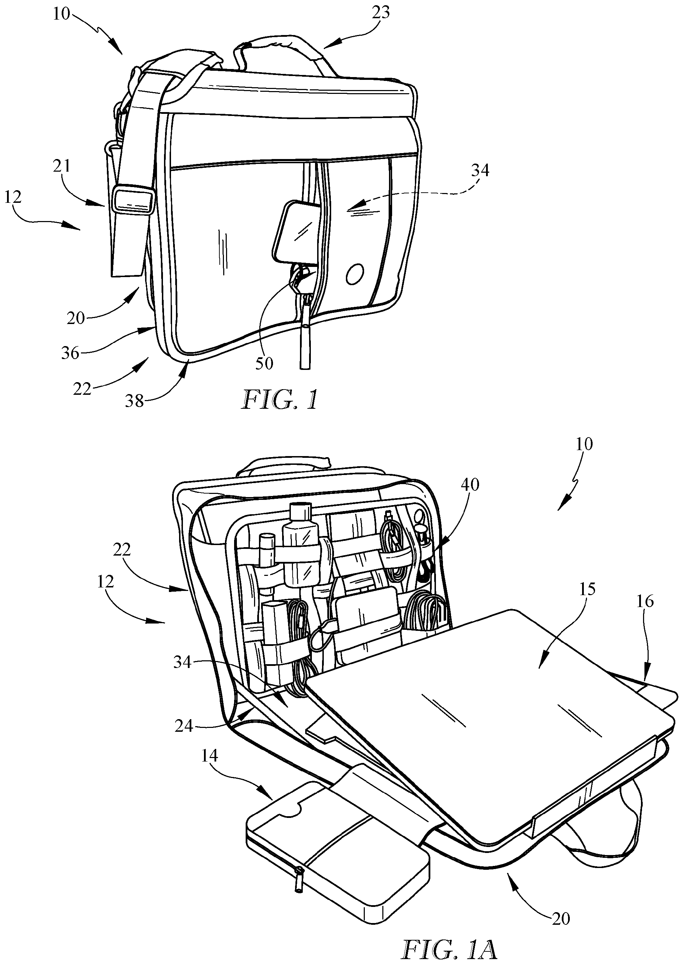

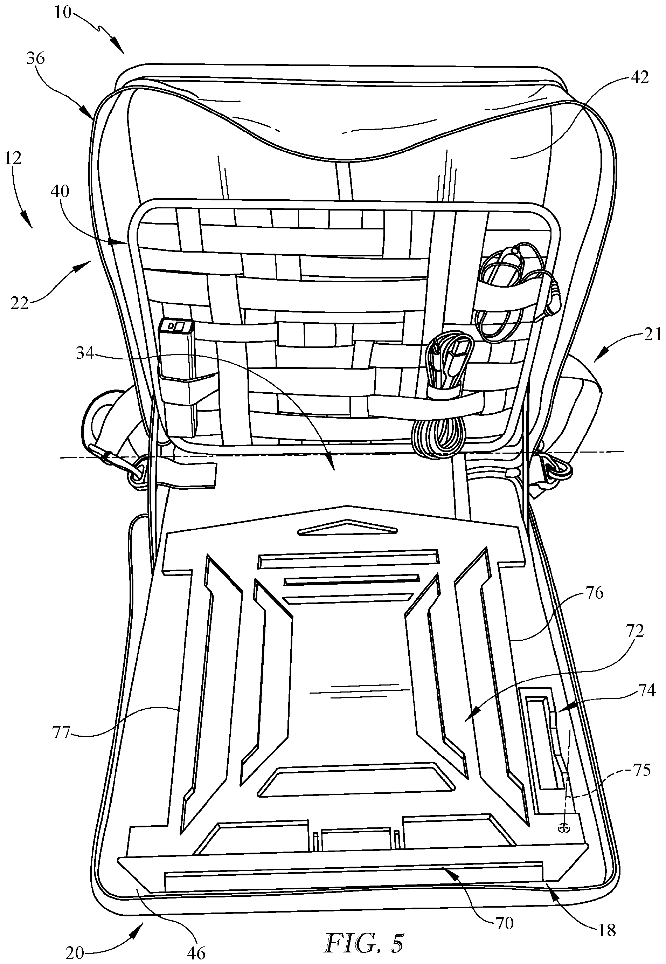

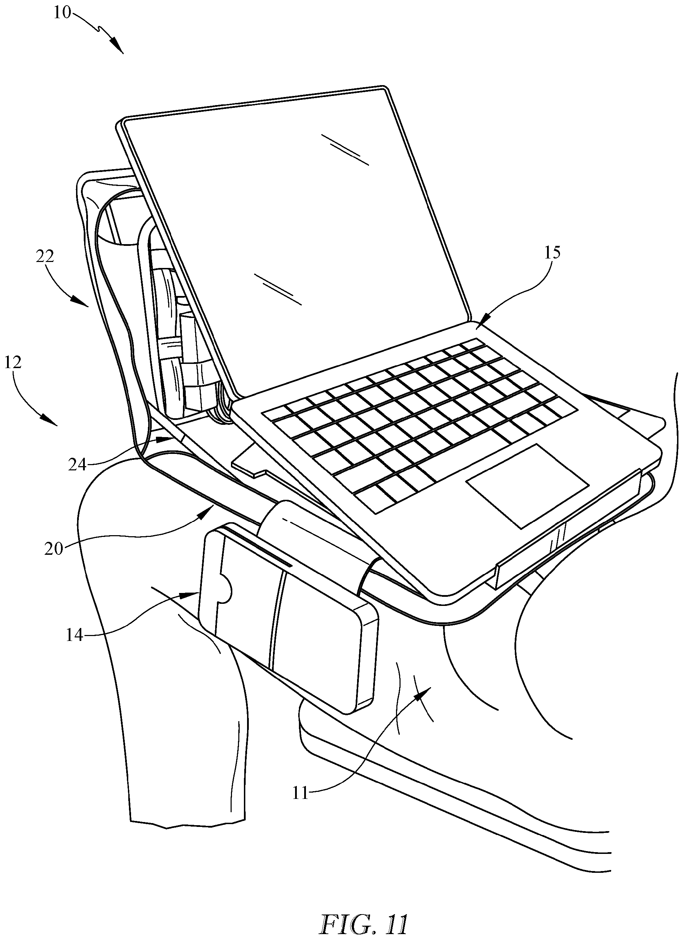

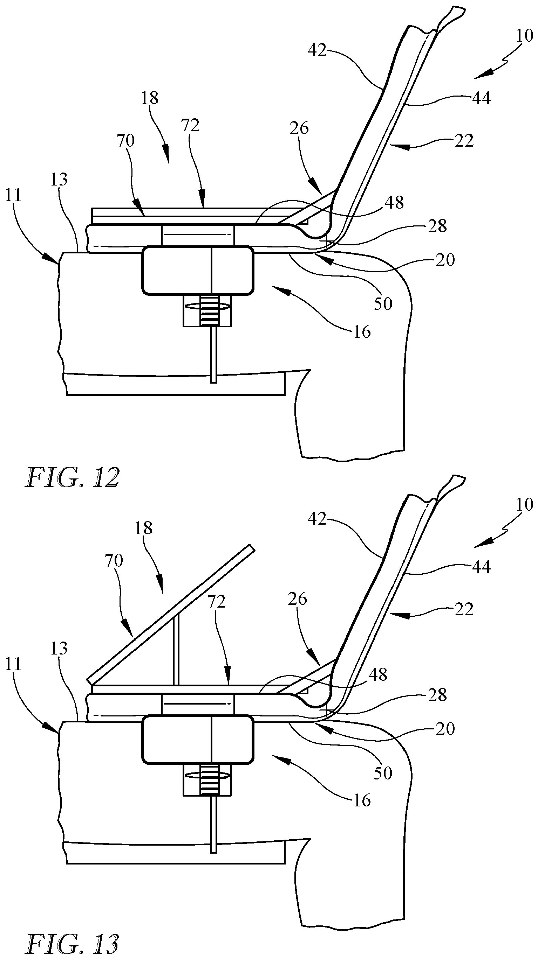

A mobile workstation 10 according to the present disclosure is shown in Figs. 1-17. The mobile workstation 10 is configured to provide a user 11 with a private enclosed workstation in any setting by allowing the user 11 to work on any relatively flat surface 13, such the user's lap, table, desk, etc., while keeping their other work materials situated. The workstation 10 also minimizes the contact with the other surfaces 13, which may be beneficial as surfaces may be contaminated with bacteria or a virus like the COVID-19 virus. Then, when the user 11 is done working, the workstation 10 provides an easy way to organize and transport their laptop or tablet 15, mobile phone 17, keys, and other work materials.

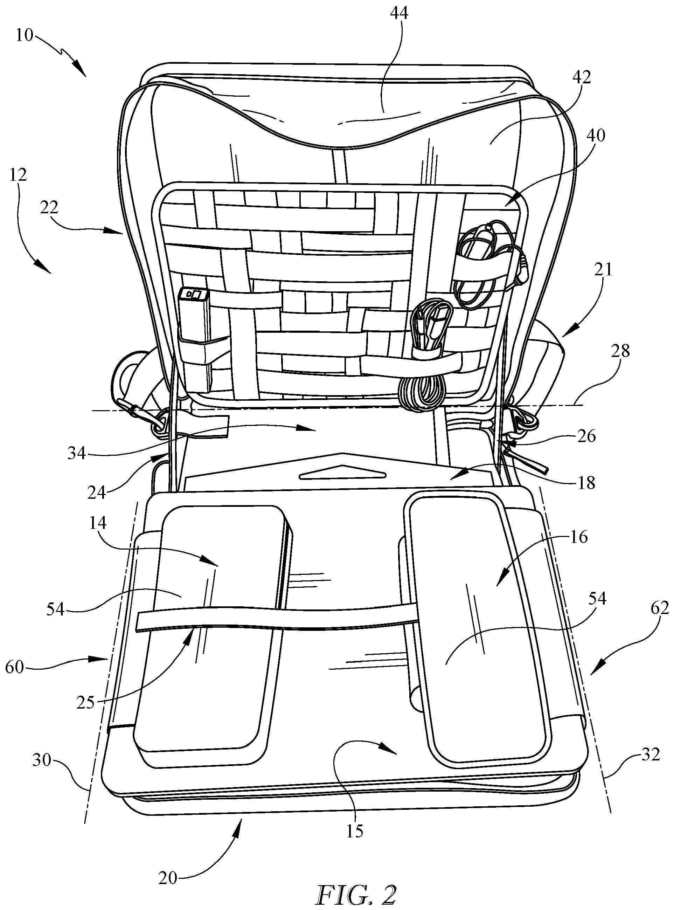

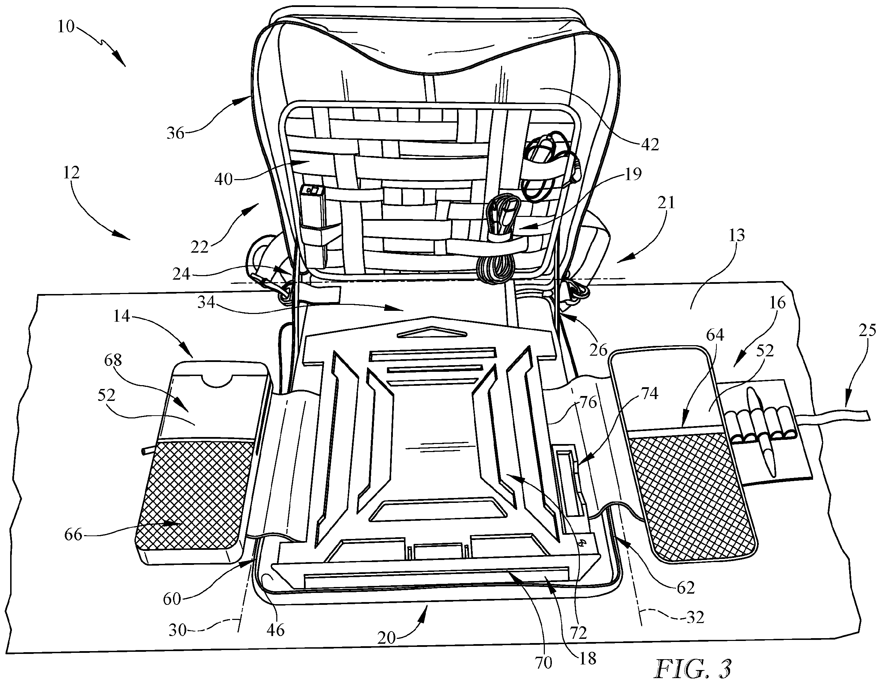

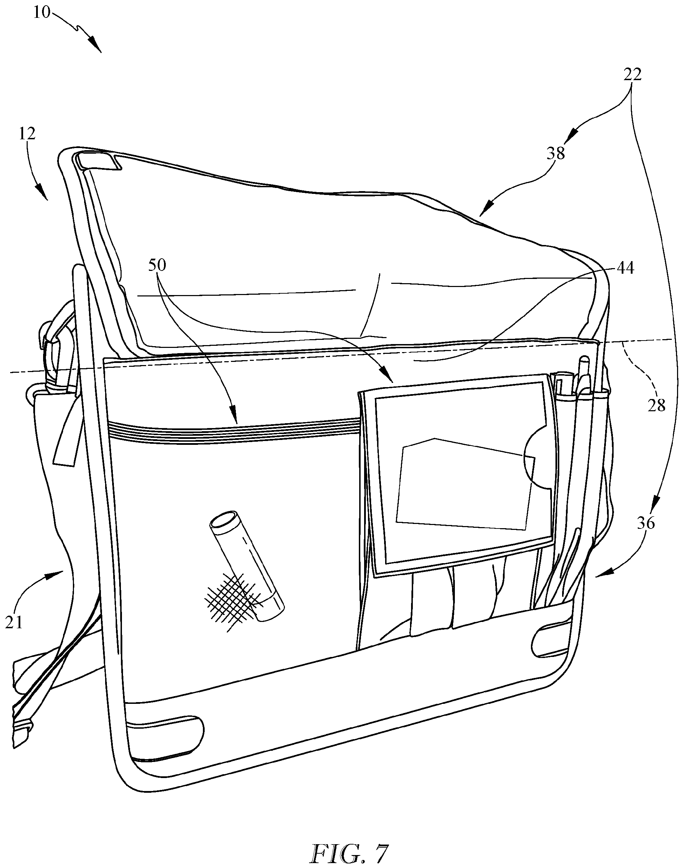

The mobile workstation 10 includes a balanced laptop case 12, detachable accessories 14, 16, and an ergonomic laptop stand 18 as shown in Figs. 1-17. The balanced laptop case 12 is configured to be easily balanced on the user's lap 13 or rest on other flat surfaces 13 (i.e. a table, desk, etc.) as shown. The case 12 also has a bottom compartment 20 and a top compartment 22 pivotable relative to the bottom compartment about an axis 28 between a closed configuration as shown in Figs. 1 and 7 and an open configuration as shown in Figs. 2-6 and 8-17. The detachable accessories 14, 16 are selectively coupled to the bottom compartment 20 of the case 12 and pivotable about a side axis 30, 32 relative to the bottom compartment 20 between a folded-in position as shown in Fig. 2 and a folded-out position as shown in Figs. 3 and 10-17. The laptop stand 18 is coupled to the bottom compartment 20 of the case 12 and configured to hold the laptop 15.

The mobile office workstation 10 is movable between a transporting mode as shown in Fig. 1 and a work mode as shown in Figs. 1A, 3-6, 8-17. In the transporting mode, the top compartment 22 is in the closed configuration in which the top compartment 22 engages the bottom compartment 20 to close an interior space 34 defined therebetween. Additionally, the accessories 14, 16 are in the folded-in position such that the accessories 14, 16 extend into the interior space 34 so that the top compartment 22 may be in the closed configuration. In the work mode, the top compartment 22 is in the open configuration such that the top compartment 22 has moved away from the bottom compartment 20 to allow access to the interior space 34. Additionally, the accessories 14, 16 are in the folded-out position such that the accessories 14 extend outside the interior space 34.

With the workstation 10 in the transporting mode, the user 11 may easily transport their laptop 15 and other work materials. To use the workstation 10, the user 11 simply locates the bottom compartment 20 on the flat surface 13, moves the top compartment 22 to the open configuration, and moves the accessories 14, 16 to the folded-out position as shown in Fig. 3. The work mode provides the user 11 with a private enclosed workstation in any setting.

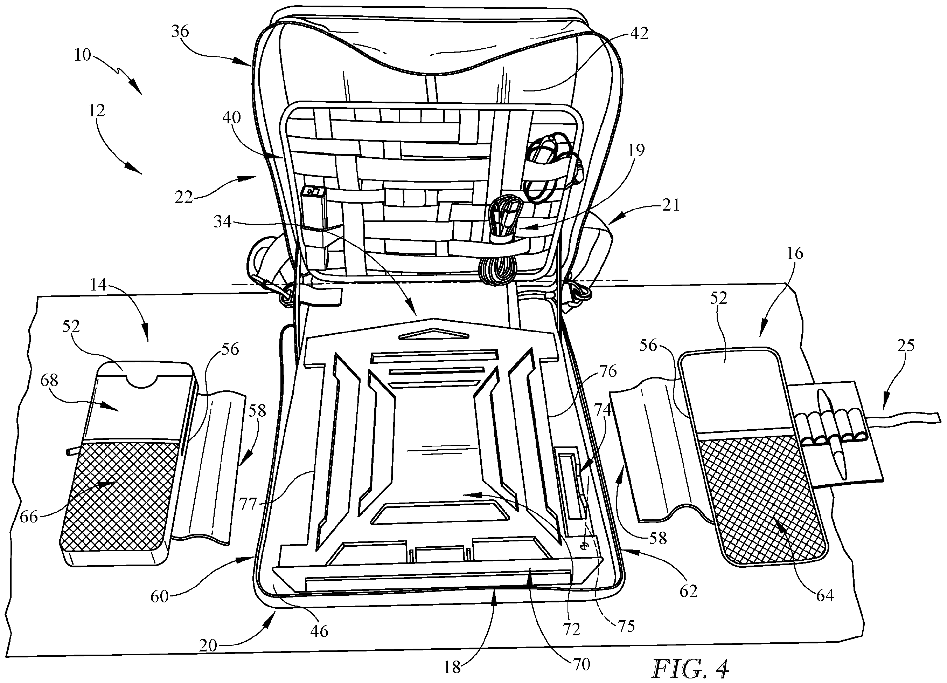

In the work mode, the detachable accessories 14, 16 may be in the folded-out position as shown in Figs. 1A and 3 or in a detached position as shown in Fig. 4. In the detached position, one or both accessories 14, 16 are detached from the bottom compartment 20 and located in spaced apart relation the bottom compartment 20. The accessories 14, 16 may be detached from the bottom compartment 20 so that a different accessory 14, 16 may be attached or the accessories 14, 16 may be rearranged.

Turning again to the case 12, the bottom and top compartments 20, 22 of the case 12 are made of a flexible fabric material. The fabric material is comfortable for the user 11 to rest the case 12 on their lap. The flexible fabric also allows irregular shaped objects to be located in the interior space 34.

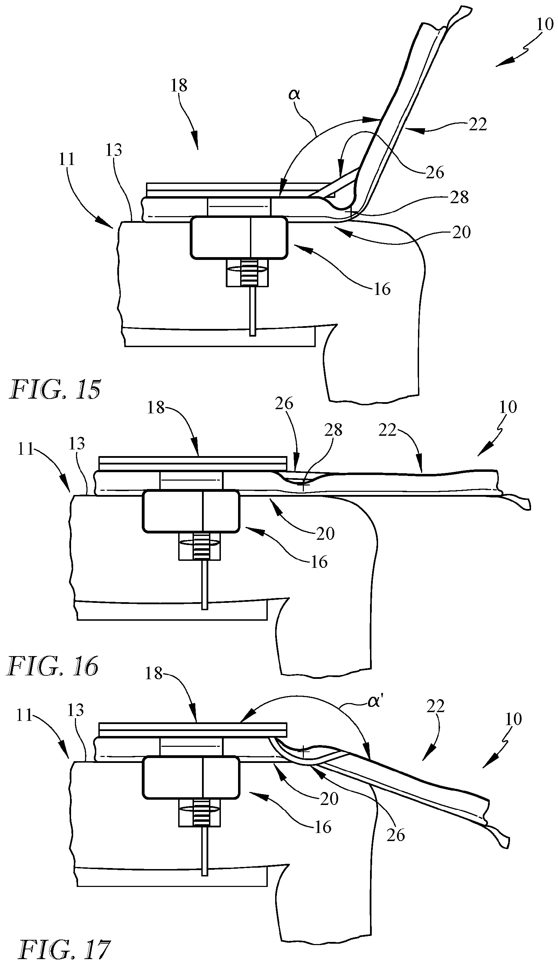

The case 12 further includes a shoulder strap 21 and carry handle 23 and adjustment straps 24, 26 as shown in Figs. 1-3 and 10-17. The straps 21 and handle 23 are coupled to an intersection of the bottom and top compartments 20, 22 and configured to support the case 12 when the case 12 is in the closed configuration. Each of the adjustment straps 24, 26 extends between and interconnects the bottom compartment 20 and the top compartment 22 on either side 60, 62 of the case 12. The length of the adjustment straps 24, 26 may be adjusted to cause the top compartment 22 to move between an upright position as shown in Figs. 2-6 and 8-15, a level position as shown in Fig. 16, and a relaxed position as shown in Fig. 17 when the top compartment 22 is in the open configuration.

The adjustment straps 24, 26 are configured to be shortened to cause the top compartment 22 to move to the upright position in which the straps 24, 26 are taunt and the top compartment 22 is at a first angle α relative to the bottom compartment 20 as shown in Fig. 15. The adjustment straps 24, 26 are configured to be lengthened to cause the top compartment 22 to move the level position in which the straps 24, 26 remain taunt, but the top compartment 22 is substantially parallel to the bottom compartment 20 as shown in Fig. 16. The adjustment straps 24, 26 may be further lengthened so that the straps 24, 26 are slack to cause the top compartment 22 to be in the relaxed position as shown in Fig. 17.

In the relaxed position, the top compartment 22 is at a second angle α' relative to the bottom compartment 20 as shown in Fig. 17. The second angle α' is greater than the first angle α when the top compartment 22 is in the upright position.

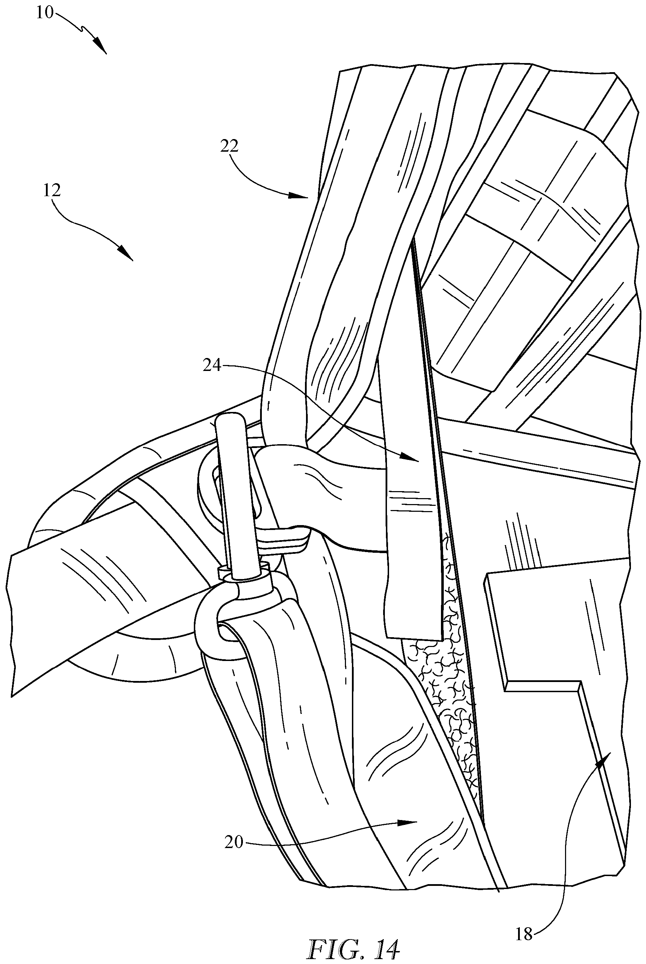

In the illustrative embodiments, the straps 24, 26 are Velcro ^{®} as shown in Fig. 14. The straps 24, 26 may be adjusted by reattaching the Velcro ^{®} to control the length of the strap. In other embodiments, another adjustment means by be used.

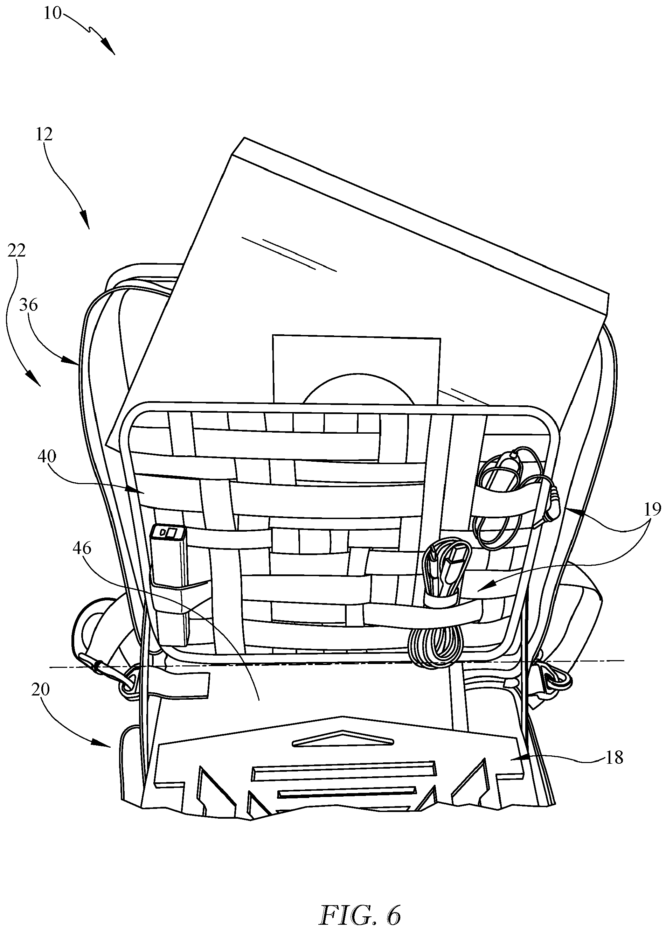

The top compartment 22 includes a main portion 36, an outer panel 38, and an organization panel 40 as shown in Figs. 1-7. The main portion 36 has an interior surface 42 that faces the bottom compartment 20 and an exterior surface 44. The outer panel 38 is coupled to the main portion 36 and pivotable relative to the main portion 36 about the axis 28 to expose additional pockets 50 for storage. The organization panel 40 is coupled to the interior surface 42 of the main portion 36. The organization panel 40 is configured to provide additional storage means for other work materials such as power cords 19 as shown in Fig. 6.

Each of the detachable accessories 14, 16 includes a first side 52, a second side 54, and an outer edge 56 as shown in Figs. 2-4. The second side 54 is opposite the first side 52. The outer edge 56 extends between and interconnects the first and second sides 52, 54. A portion of the outer edge 56 is selectively coupled to the bottom compartment 20 of the case 12 so that the accessory 14, 16 may be pivoted between the folded-in position and the folded-out position about the side axis 30, 32 that is parallel to the side 60, 62 of the case 12.

In the illustrative embodiment, the detachable accessories 14, 16 include a first accessory 14 and a second accessory 16 as shown in Figs. 2-4 and 8-17. The first accessory 14 is selectively coupled to a first side 60 of the bottom compartment 20 and the second accessory 16 is selectively coupled to a second side 62 of the bottom compartment 20 opposite the first side 60. Each accessory 14, 16 is interchangeable with each other so that the first accessory 14 may be coupled to the second side 62 and the second accessory 16 may be coupled to the first side 60.

Optionally, the workstation 10 may include more than two detachable accessories 14, 16. The different detachable accessories 14, 16 are interchangeable such that each accessory 14, 16 may be selectively coupled to the bottom compartment 20 in different locations.

The first side 52 of each accessory 14, 16 faces the bottom compartment 20 when located in the folded-in position. Then when the accessory 14, 16 is located in the folded-out position, the second side 54 of the accessory 14, 16 engages the flat surface 13 or the user 11. However, the accessories 14, 16 are interchangeable such that each accessory 14, 16 may be coupled to the opposite side 60, 62 so that the second side 54 faces the bottom compartment 20 when located in the folded-in position, while the first side 52 faces the relatively flat surface 13.

In the illustrative embodiment, one of the accessories 14, 16 includes a strap 25 to secure the accessories 14, 16 in the folded-in position as shown in Fig. 3. The strap 25 extends from the second side surface 54 of the detachable accessory 16 and couples to the second side surface 54 of the other detachable accessory 14. The strap 25 couples the detachable accessories together so that the accessories are blocked from changing to the folded-out position, which helps when the workstation 10 is changed from the transporting mode to the work mode.

Optionally, the strap 25 may be Velcro ^{®} that couples to Velcro ^{®} coupled to the second side surface 54 of the detachable accessory 14. Alternatively, the strap 25 may have snaps that couple to corresponding snaps on the second side surface 54 of the detachable accessory 14. Alternatively, the strap 25 may have another suitable attachment means to couple to the second side surface 54 of the detachable accessory 14.

In the illustrative embodiment, each accessory 14, 16 further includes an attachment feature 58 as shown in Fig. 4. The attachment features 58 are each configured to selectively couple the corresponding accessory 14, 16 to an interior surface 46 of the bottom compartment 20. Optionally, the attachment feature 58 may be located on a portion of the outer edge 56 of the accessories 14, 16. Alternatively, the attachment feature 58 may be located on one of the first side 52 or the second side 54 of the accessories 14, 16.

The attachment feature on each accessory 14, 16 is interchangeable with the corresponding feature formed on the bottom compartment 20. In this way, the first accessory 14 may be coupled to the second side 62 and the second accessory 16 may be coupled to the first side 60.

Optionally, the attachment feature 58 may be Velcro ^{®} that couples to Velcro ^{®} coupled to the interior surface 46 of the bottom compartment 20. Alternatively, the attachment feature 58 may be a zipper that mates with a zipper formed on the bottom compartment 20. Alternatively, the attachment feature 58 may be a snap or clasp that mates with a corresponding snap formed on the bottom compartment 20. The attachment feature 58 may be another suitable attachment feature 58.

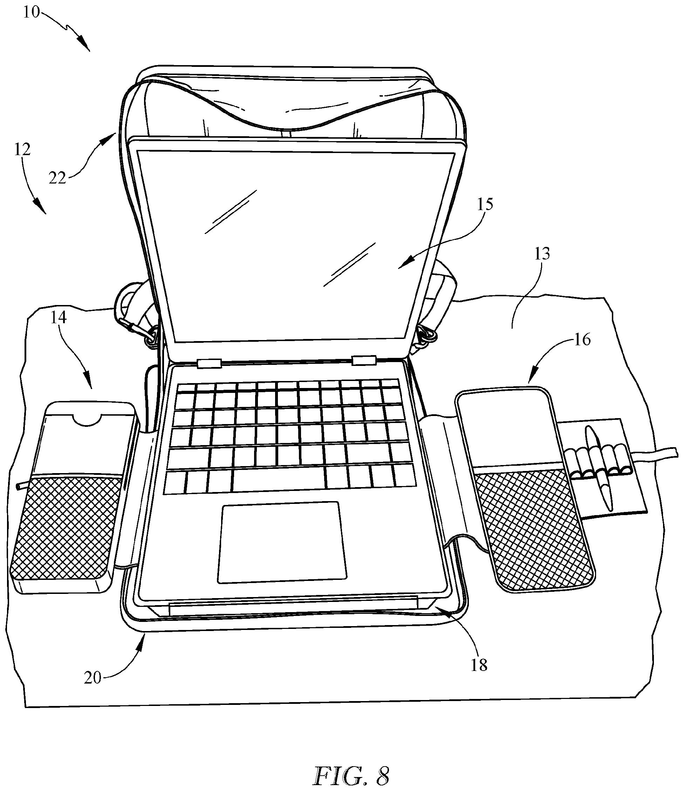

In the illustrative embodiments, the first and second sides 52, 54 of the detachable accessories 14, 16 may each include pockets 64, 66 as shown in Figs. 8-10. The pockets 64, 66 are configured to provide additional storage.

The pockets 64, 66 formed by the detachable accessories 14, 16 may be a pencil or pen holder. The pockets 64, 66 may be configured to hold other office supplies or materials. In the illustrative embodiment, the pockets, 64, 66 are mesh pockets.

Optionally, one of the detachable accessories 14, 16 may be configured to stand up vertically relative to the case 12. Once the detachable accessory 14, 16 is located in the detached position, the accessory 14, 16 may be stood up vertically relative to the case 12. For instance, one of the accessories 14, 16 may be a pencil case or cup that may be stood up vertically when located in the detached position.

Optionally, the first side 52 and/or the second side 54 of one of the detachable accessories 14, 16 may include a note pad or Post-it ^{®} notes (not shown). The note pad may be coupled to the side 52, 54 so that the note pad stays in place when change between the different positions. Optionally, the first side 52 and/or the second side 54 of one of the accessories 14, 16 may include a business card holder or a picture holder 68.

Optionally, the first side 52 and/or the second side 54 of one of the accessories 14, 16 may be a dry erase board. Optionally, the detachable accessories may include a mouse pad. One of the first or second sides may form the mouse pad. The mouse pad may be configured to be coupled to the bottom compartment 20 on either side of the bottom compartment 20 of the case 12 for right or left handed users 11.

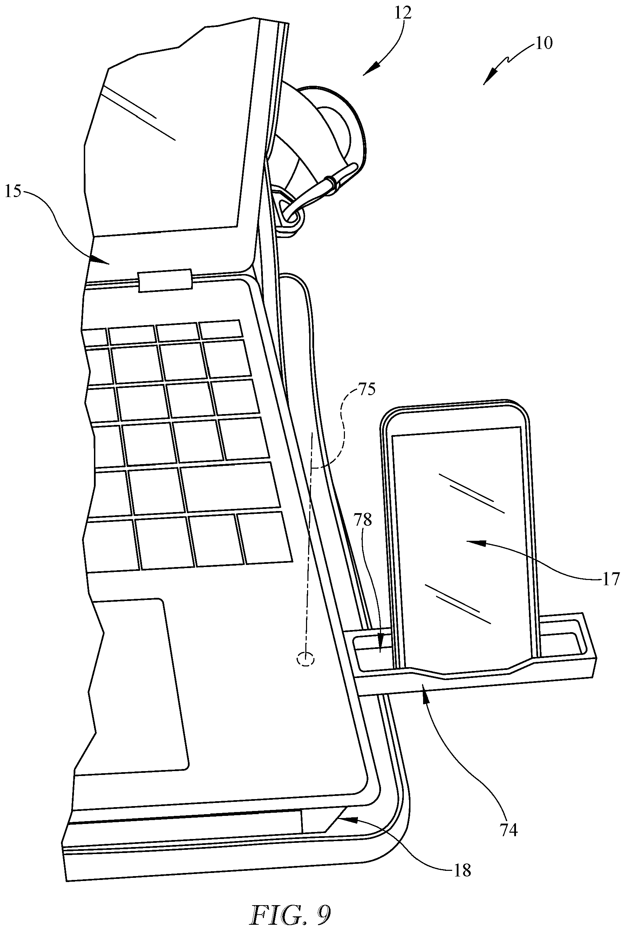

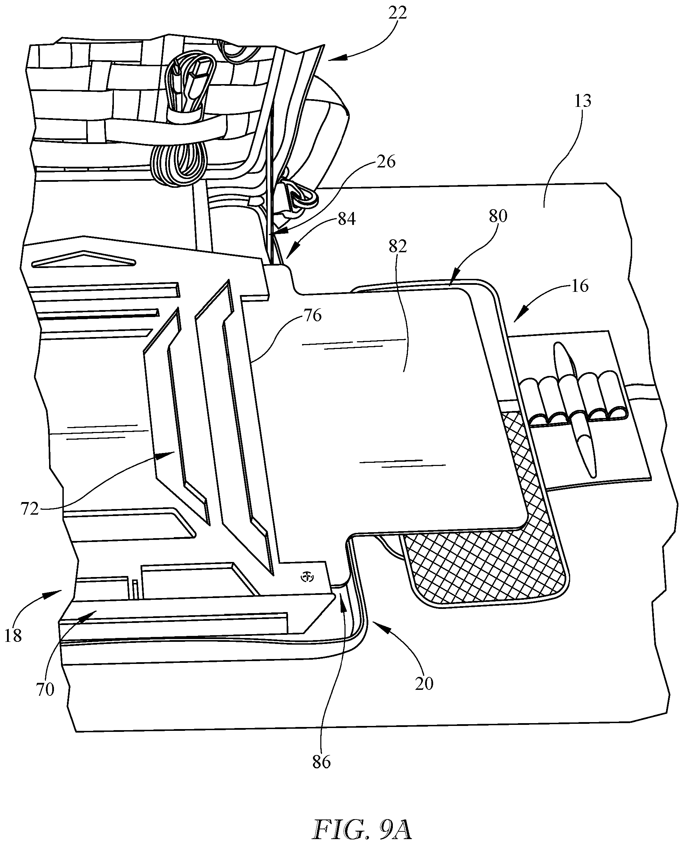

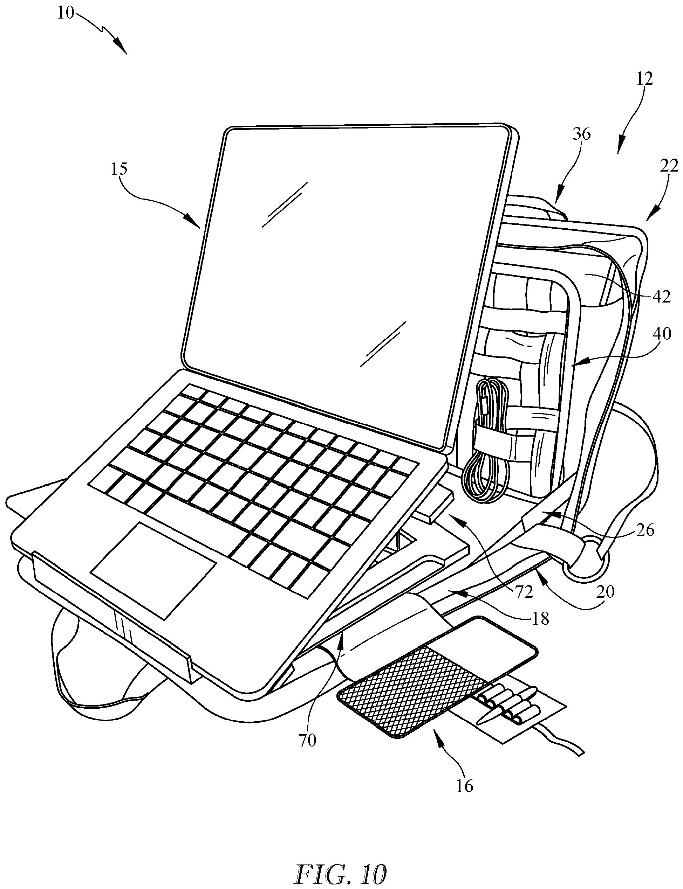

The laptop stand 18 includes a base 70, a support portion 72, and a retractable mobile phone stand 74 as shown in Figs. 3-5 and 9-13. The base 70 is planar and coupled to the interior surface 46 of the bottom compartment 20. The support portion 72 supports the laptop 15 and is configured to move relative to base 70 between a flat configuration as shown in Figs. 2-6 and 12 and an angled configuration as shown in Figs. 10, 11, and 13 when the workstation 10 is in the open configuration. The mobile phone stand 74 is coupled to the base 70 and configured to pivot relative to the base 70 about an axis 75 between a retracted position as shown in Figs. 3-5 and an extended position as shown in Fig. 9.

In the flat configuration, the support portion 72 is parallel to the base 70. In the angled configuration, the support portion 72 is angled relative to the base 70 so that the laptop's keyboard is ergonomically positioned for the user 11.

In the retracted position, the mobile phone stand 74 is flush with a side surface 76 of the base 70 as shown in Figs. 3-5. In the extended position, the mobile phone stand 74 extends from the side surface 76 of the base 70 and is perpendicular to the side surface 76.

The mobile phone stand 74 is shaped to a channel 78 as shown in Fig. 9. The channel 78 is sized to receive the mobile phone 17 so that the mobile phone 17 is in an upright position.

Optionally, the mobile phone stand 74 is configured to be detached from the base 70 of the stand 18 and reattached to either side of the base 70 of the stand 18. The mobile phone stand 74 may be detached and reattached to either side depending on the user's preference. Additionally, the reconfigurable mobile phone stand 74 allows a right handed or a left handed user 11 to reposition the mobile phone stand 74 to their dominant hand.

In the illustrative embodiments, the laptop stand 18 may further include a mouse pad 80 as shown in Fig. 9A. The mouse pad 80 is coupled to the base 70 and extends outward from the base 70. The mouse pad 80 is shaped to include a relatively flat, planar surface 82 that once attached to the base 70 extends outward and away from the base 70 adjacent the laptop 15 so that the user 11 may use a mouse with the laptop 15. The planar surface 82 is parallel to the relatively flat surface 13 on which the mobile workstation 10 rests.

The mouse pad 80 is made of a ridged material so that when the mobile workstation 10 rests on the lap 13 of the user 11, the mouse pad 80 stays in place relative to the base 70 of the laptop stand 18. The mouse pad 80 may extend from either side 76, 77 of the base 70. In the illustrative embodiment, the mouse pad 80 is attached to the base 70 of the laptop stand 18 at attachment portions 84, 86 as shown in Fig. 9A. The attachment portions 84, 86 may be attached to the base 70 on either side 76, 77 of the base 70.

Optionally, the user 11 may detach the mobile phone stand 74 to attach the mouse pad 80. In such instances, one the mobile phone stand 74 is detached, the mouse pad 80 may be attached to the base 70 on the corresponding side 76, 77.

The present disclosure relates to a carry all bag or case 12 that functions as a workstation 10 to provide the availability to be productive anywhere. The workstation 10 provides storage and organization for all work things (i.e. wires, electronic accessories, writing instruments, note pads, paper, dry erase board, water bottle, etc.) The workstation 10 also includes an ergonomic laptop stand 18 for the user's computer or laptop 15.

The reconfigurable workstation 10 also provides surface safety. The case 12 is configured to change between the closed configuration and the open configuration so that the different components within the case 12 do not touch the surface 13. The exterior surfaces 44, 48 of the case 12 may be the only surfaces to contact the flat surface 13.

Further, the case 12 also allows the user 11 to rest the workstation on their lap 13 when in the open configuration. When the user 11 is ready to travel, the workstation 10 may be changed to the transporting mode, so that the case 12 may be carried using one the strap 21 or handle 23.

The workstation 10 provides privacy with enclosed personal area created by the upright configuration of the case 12. The detachable accessories 14, 16 provide the user personalization of their workspace. Further, the workstation 10 may also be personalized with the fabric, embroidering, carrying method (handle, shoulder strap, or backpack).

The workstation 10 also provides integrated storage for power banks or chargers, power cords, etc. with exterior access for ease of charging. The case may also have integrated storage for paper file folders and notebooks as shown in Fig. 6.

The workstation 10 provides a mobile office solution for the hybrid home/office worker 11 as well as the user 11 that moves locations within their home. The workstation 10 may be adapted to carry a mobile computing device 15 such as a computer, a laptop, a tablet, or other mobile computing device. The workstation 10 may also hold a mobile phone 17 and other electronic accessories, while providing wire management. The workstation 10 also includes a laptop stand 18 with adjustable ergonomics. Of course, those of ordinary skill in the art will recognize that the stand may be used with various computers and electronic notebook devices.

The workstation 10 may also have storage and organization for quick and easy access to items such as a phone 17, keys, business cards, writing instruments, snack, etc. The workstation 10 also has multiple ways of to carry the workstation 10 including a handle 23 or a shoulder strap 21. Optionally, the case 12 of the workstation 10 may be a backpack.

The workstation 10 also provides privacy and surface safety/hygiene. The workstation 10 may also be configured to store a water bottle or coffee mug. The workstation 10 may also be personalized with different fabric/colors and/or with the inclusion of picture and business cards. The workstation 10 also has the ability for the user 11 to customize accordingly to their needs.

The following numbered clauses include embodiments that are contemplated and non-limiting:
Clause 1. A mobile workstation adapted to carry a mobile computing device, the mobile workstation comprising
   a balanced case including a bottom compartment and a top compartment coupled to the bottom compartment and pivotable relative to the bottom compartment about an axis between a closed configuration in which the top compartment engages the bottom compartment to close an interior space defined therebetween and an open configuration in which the top compartment has moved away from the bottom compartment to allow access to the interior space.
Clause 2. The mobile workstation of clause 1, any other suitable clause, or combination of clauses, further comprising detachable accessories configured to be selectively coupled to one side of the bottom compartment of the balanced case.
Clause 3. The mobile workstation of clause 2, any other suitable clause, or combination of clauses, wherein each of the detachable accessories is configured to pivot about a corresponding side axis relative to the bottom compartment between a folded-in position in which the detachable accessories are extend into the interior space and a folded-out position in which the detachable accessories extend outside of the interior space.
Clause 4. The mobile workstation of clause 3, any other suitable clause, or combination of clauses, wherein the mobile workstation is configured to change between (i) a transporting mode in which the top compartment of the balanced case is in the closed configuration and the detachable accessories are in the folded-in position and (ii) a work mode in which the top compartment of the balanced case is in the open configuration and the detachable accessories are in the folded-out position such that the detachable accessories extend outside of the interior space of the balanced case to provide a user with a private enclosed workstation in any setting by allowing the user to work on any relatively flat surface.
Clause 5. The mobile workstation of clause 4, any other suitable clause, or combination of clauses, wherein the balanced case further includes adjustment straps that each extend between and interconnect the bottom compartment and the top compartment on either side of the balanced case to cause the top compartment to move between (i) an upright position in which the top compartment is at a first angle relative to the bottom compartment, (ii) a level position in which the top compartment is substantially parallel to the bottom compartment, and (iii) a relaxed position in which the top compartment is at a second angle relative to the bottom compartment that is greater than the first angle when the top compartment is in the upright position.
Clause 6. The mobile workstation of clause 5, any other suitable clause, or combination of clauses, wherein the detachable accessories are configured to be detached from the bottom compartment of the balanced case and located in a detached position in which the detachable accessories are located in spaced apart relation the bottom compartment.
Clause 7. The mobile workstation of clause 6, any other suitable clause, or combination of clauses, wherein the detachable accessories include a first accessory coupled to a first side of the bottom compartment and a second accessory coupled to a second side of the bottom compartment.
Clause 8. The mobile workstation of clause 7, any other suitable clause, or combination of clauses, wherein the first and second accessories are configured to be interchangeable such that the first accessory is coupled to the second side and the second accessory is coupled to the first side.
Clause 9. The mobile workstation of clause 8, any other suitable clause, or combination of clauses, wherein each of the detachable accessories includes a first side, a second side opposite the first side, and an attachment feature that extends from one of the first side and the second side and configured to selectively couple the corresponding detachable accessory to an interior surface of the bottom compartment.
Clause 10. The mobile workstation of clause 9, any other suitable clause, or combination of clauses, wherein the attachment feature of each accessory is interchangeable with the corresponding feature formed on the bottom compartment.
Clause 11. The mobile workstation of clause 9, any other suitable clause, or combination of clauses, wherein one detachable accessory of the detachable accessories includes a securing strap that extends from the second side of the one detachable accessory and configured to couple to the second side of the other detachable accessory when the detachable accessories are in the folded-in position to block movement of the detachable accessories relative to the balanced case.
Clause 12. The mobile workstation of clause 6, any other suitable clause, or combination of clauses, wherein at least one of the detachable accessories is configured to stand up vertically relative to the balanced case once the at least one of the detachable accessories is located in the detached position.
Clause 13. The mobile workstation of clause 12, any other suitable clause, or combination of clauses, wherein the at least one of the detachable accessories is a pencil cup.
Clause 14. The mobile workstation of clause 4, any other suitable clause, or combination of clauses, further comprising a stand coupled to an interior surface of the bottom compartment of the balanced case and configured to hold the mobile computing device.
Clause 15. The mobile workstation of clause 14, any other suitable clause, or combination of clauses, wherein the stand includes a base coupled to the bottom compartment and a support portion that supports the mobile computing device and configured to move relative to the base between a flat configuration in which the support portion is parallel to the base and an angled configuration in which the support portion is angled relative to the base.
Clause 16. The mobile workstation of clause 15, any other suitable clause, or combination of clauses, wherein the stand further includes a mobile phone stand coupled to the base to support a mobile phone in an upright position.
Clause 17. The mobile workstation of clause 16, any other suitable clause, or combination of clauses, wherein the mobile phone stand is configured to pivot relative to the base about an axis between a retracted position in which the mobile phone stand is flush with a side surface of the base and an extended position in which the mobile phone stand extends from the side surface of the base and is perpendicular to the side surface.
Clause 18. The mobile workstation of clause 15, any other suitable clause, or combination of clauses, wherein the stand further includes a mouse pad coupled to the base and the mouse pad is formed to define a planar surface parallel to the relatively flat surface.
Clause 19. The mobile workstation of clause 18, any other suitable clause, or combination of clauses, wherein the mobile phone stand is configured to be detached from the base of the stand and reattached to either side of the base of the stand.
Clause 20. A method comprising
   providing a mobile workstation comprising a balanced case and detachable accessories configured to be selectively coupled to the balanced case to pivot about a corresponding side axis of the balanced case relative to the balanced case.
Clause 21. The method of clause 20, any other suitable clause, or combination of clauses, wherein the balanced case includes a bottom compartment and a top compartment coupled to the bottom compartment and pivotable relative to the bottom compartment about an axis.
Clause 22. The method of clause 21, any other suitable clause, or combination of clauses, further comprising arranging the mobile workstation on any relatively flat surface with the mobile workstation in a closed configuration in which the top compartment engages the bottom compartment to close an interior space defined therebetween.
Clause 23. The method of clause 22, any other suitable clause, or combination of clauses, further comprising pivoting the top compartment of the balanced case from the closed configuration to an open configuration in which the top compartment has moved away from the bottom compartment to allow access to the interior space.
Clause 24. The method of clause 23, any other suitable clause, or combination of clauses, pivoting each of the detachable accessories from a folded-in position in which the detachable accessories are extend into the interior space and to folded-out position in which the detachable accessories extend outside of the interior space so that the mobile workstation is in a work mode to provide a user with a private enclosed workstation.
Clause 25. The method of clause 24, any other suitable clause, or combination of clauses, wherein the balanced case further includes adjustment straps that each extend between and interconnect the bottom compartment and the top compartment on either side of the balanced case.
Clause 26. The method of clause 25, any other suitable clause, or combination of clauses, further comprising changing a length of the adjustment straps to cause the top compartment to move between an upright position in which the top compartment is at a first angle relative to the bottom compartment and a relaxed position in which the top compartment is at a second angle relative to the bottom compartment that is greater than the first angle when the top compartment is in the upright position.
Clause 27. The method of clause 26, wherein the detachable accessories include a first accessory coupled to a first side of the bottom compartment and a second accessory coupled to a second side of the bottom compartment.
Clause 28. The method of clause 27, any other suitable clause, or combination of clauses, wherein the first and second accessories are configured to be interchangeable such that the first accessory is coupled to the second side and the second accessory is coupled to the first side.
Clause 29. The method of clause 28, any other suitable clause, or combination of clauses, further comprising detaching the first accessory and the second accessory from the bottom compartment of the balanced case and moving the first accessory and the second accessory to a detached position in which the detachable accessories are located in spaced apart relation the bottom compartment.
Clause 30. The method of clause 29, any other suitable clause, or combination of clauses, wherein the mobile workstation further comprises a stand configured to support a mobile computing device.
Clause 31. The method of clause 30, any other suitable clause, or combination of clauses, wherein the stand includes a base coupled to the bottom compartment and a support portion that supports the mobile computing device,
Clause 32. The method of clause 31, any other suitable clause, or combination of clauses, further comprising moving the support portion of the stand from a flat configuration in which the support portion is parallel to the base to an angled configuration in which the support portion is angled relative to the base.
Clause 33. The method of clause 28, any other suitable clause, or combination of clauses, wherein the stand further includes a mobile phone stand coupled to the base to support a mobile phone.
Clause 34. The method of clause 33, any other suitable clause, or combination of clauses, wherein the method further comprises pivoting the mobile phone stand relative to the base about an axis from a retracted position in which the mobile phone stand is flush with a side surface of the base to an extended position in which the mobile phone stand extends from the side surface of the base and is perpendicular to the side surface.

While the disclosure has been illustrated and described in detail in the foregoing drawings and description, the same is to be considered as exemplary and not restrictive in character, it being understood that only illustrative embodiments thereof have been shown and described and that changes and modifications are contemplated.

## Claims

1. A mobile workstation adapted to carry a mobile computing device, the mobile workstation comprising
a balanced case including a bottom compartment and a top compartment coupled to the bottom compartment and pivotable relative to the bottom compartment about an axis between a closed configuration in which the top compartment engages the bottom compartment to close an interior space defined therebetween and an open configuration in which the top compartment has moved away from the bottom compartment to allow access to the interior space, and
detachable accessories configured to be selectively coupled to one side of the bottom compartment of the balanced case, each of the detachable accessories configured to pivot about a corresponding side axis relative to the bottom compartment between a folded-in position in which the detachable accessories are extend into the interior space and a folded-out position in which the detachable accessories extend outside of the interior space,
wherein the mobile workstation is configured to change between (i) a transporting mode in which the top compartment of the balanced case is in the closed configuration and the detachable accessories are in the folded-in position and (ii) a work mode in which the top compartment of the balanced case is in the open configuration and the detachable accessories are in the folded-out position such that the detachable accessories extend outside of the interior space of the balanced case to provide a user with a private enclosed workstation in any setting by allowing the user to work on any relatively flat surface.

2. The mobile workstation of claim 1, wherein the balanced case further includes adjustment straps that each extend between and interconnect the bottom compartment and the top compartment on either side of the balanced case to cause the top compartment to move between (i) an upright position in which the top compartment is at a first angle relative to the bottom compartment, (ii) a level position in which the top compartment is substantially parallel to the bottom compartment, and (iii) a relaxed position in which the top compartment is at a second angle relative to the bottom compartment that is greater than the first angle when the top compartment is in the upright position.

3. The mobile workstation of claim 1 or 2, wherein the detachable accessories are configured to be detached from the bottom compartment of the balanced case and located in a detached position in which the detachable accessories are located in spaced apart relation the bottom compartment.

4. The mobile workstation of claim 1, 2 or 3, wherein the detachable accessories include a first accessory coupled to a first side of the bottom compartment and a second accessory coupled to a second side of the bottom compartment, the first and second accessories are configured to be interchangeable such that the first accessory is coupled to the second side and the second accessory is coupled to the first side.

5. The mobile workstation of any preceding claim, wherein each of the detachable accessories includes a first side, a second side opposite the first side, and an attachment feature that extends from one of the first side and the second side and configured to selectively couple the corresponding detachable accessory to an interior surface of the bottom compartment, preferably wherein the attachment feature of each accessory is interchangeable with the corresponding feature formed on the bottom compartment.

6. The mobile workstation of any preceding claim, wherein one detachable accessory of the detachable accessories includes a securing strap that extends from the second side of the one detachable accessory and configured to couple to the second side of the other detachable accessory when the detachable accessories are in the folded-in position to block movement of the detachable accessories relative to the balanced case.

7. The mobile workstation of claim 3, or any of claims 4 to 6 when dependent on claim 3, wherein at least one of the detachable accessories is configured to stand up vertically relative to the balanced case once the at least one of the detachable accessories is located in the detached position, preferably wherein the at least one of the detachable accessories is a pencil cup.

8. The mobile workstation of any of the preceding claims, further comprising a stand coupled to an interior surface of the bottom compartment of the balanced case and configured to hold the mobile computing device, preferably wherein the stand includes a base coupled to the bottom compartment and a support portion that supports the mobile computing device and configured to move relative to the base between a flat configuration in which the support portion is parallel to the base and an angled configuration in which the support portion is angled relative to the base.

9. The mobile workstation of claim 8, wherein the stand further includes a mobile phone stand coupled to the base to support a mobile phone in an upright position and configured to pivot relative to the base about an axis between a retracted position in which the mobile phone stand is flush with a side surface of the base and an extended position in which the mobile phone stand extends from the side surface of the base and is perpendicular to the side surface, preferably wherein the stand further includes a mouse pad coupled to the base and the mouse pad is formed to define a planar surface parallel to the relatively flat surface.

10. The mobile workstation of claim 9, wherein the mobile phone stand is configured to be detached from the base of the stand and reattached to either side of the base of the stand.

11. A method comprising
providing a mobile workstation comprising a balanced case and detachable accessories configured to be selectively coupled to the balanced case to pivot about a corresponding side axis of the balanced case relative to the balanced case, the balanced case including a bottom compartment and a top compartment coupled to the bottom compartment and pivotable relative to the bottom compartment about an axis,
arranging the mobile workstation on any relatively flat surface with the mobile workstation in a closed configuration in which the top compartment engages the bottom compartment to close an interior space defined therebetween,
pivoting the top compartment of the balanced case from the closed configuration to an open configuration in which the top compartment has moved away from the bottom compartment to allow access to the interior space, and
pivoting each of the detachable accessories from a folded-in position in which the detachable accessories are extend into the interior space and to folded-out position in which the detachable accessories extend outside of the interior space so that the mobile workstation is in a work mode to provide a user with a private enclosed workstation.

12. The method of claim 11, wherein the balanced case further includes adjustment straps that each extend between and interconnect the bottom compartment and the top compartment on either side of the balanced case, and wherein the method further comprises changing a length of the adjustment straps to cause the top compartment to move between an upright position in which the top compartment is at a first angle relative to the bottom compartment and a relaxed position in which the top compartment is at a second angle relative to the bottom compartment that is greater than the first angle when the top compartment is in the upright position.

13. The method of claim 11 or 12, wherein the detachable accessories include a first accessory coupled to a first side of the bottom compartment and a second accessory coupled to a second side of the bottom compartment, the first and second accessories are configured to be interchangeable such that the first accessory is coupled to the second side and the second accessory is coupled to the first side.

14. The method of claim 13, further comprising detaching the first accessory and the second accessory from the bottom compartment of the balanced case and moving the first accessory and the second accessory to a detached position in which the detachable accessories are located in spaced apart relation the bottom compartment.

15. The method of claim 14, wherein the mobile workstation further comprises a stand configured to support a mobile computing device, the stand including a base coupled to the bottom compartment and a support portion that supports the mobile computing device, and the method further comprises moving the support portion of the stand from a flat configuration in which the support portion is parallel to the base to an angled configuration in which the support portion is angled relative to the base, preferably wherein the stand further includes a mobile phone stand coupled to the base to support a mobile phone, and wherein the method further comprises pivoting the mobile phone stand relative to the base about an axis from a retracted position in which the mobile phone stand is flush with a side surface of the base to an extended position in which the mobile phone stand extends from the side surface of the base and is perpendicular to the side surface.
